# FASCICULE DE BREVET EUROPEEN

(11) **EP 0 315 521 B1**
(45) Date de publication et mention de la délivrance du brevet: **04.08.1993**
(21) Numéro de dépôt: 88402746.7
(22) Date de dépôt: 02.11.1988
(51) Int. Cl.: A01G 3/04, A01F 15/00, A01F 15/02

(54) **Tailleuse-botteleuse de sarments**
Schneid- und Sammelvorrichtung für Weinreben
Cutting and collecting apparatus for vines

(30) Priorité: 02.11.1987 FR 8715596
(43) Date de publication de la demande: 10.05.1989
(73) Titulaire: Favier, Christian, F-34370 Cazouls les Beziers (FR); Hodde, Michel, F-34370 Cazouls les Beziers (FR)
(72) Inventeur: Favier, Christian, F-34370 Cazouls les Beziers (FR); Hodde, Michel, F-34370 Cazouls les Beziers (FR)
(74) Mandataire: Chauchard, Robert

(56) Documents cités:
- DE-A- 3 004 431
- FR-A- 2 233 926
- FR-A- 2 553 969
- GB-A- 2 070 906
- US-A- 1 354 267
- US-A- 2 096 990

## Description

L'invention porte sur une tailleuse-botteleuse de sarments comportant, sur un engin emjambeur apte à circuler sur les arbustes à tailler, une tailleuse formée de dispositifs ameneurs associés à des organes de sectionnement des sarments eux-mêmes suivis d'un passage d'évacuation des sarments coupés.

De telles tailleuses sont couramment utilisées, en particulier pour tailler les sarments de vigne après la récoite.

Les sarments ainsi taillés sont ensuite ramassés manuellement moyennant un prix de revient prohibitif, ou traités au moyen de roto-broyeurs qui abandonnent les tronçons obtenus sur la terre en vue d'une dégradation biologique spontanée au risque d'ensemencer le sol de spores et de bactéries patogènes lorsque les sarments taillés ont souffert de maladies cryptogamiques ou bactériennes. Une tailleuse équipeé d'un tel roto-broyeur est par exemple décrite dans FR-A-2 233926.

Les roto-broyeurs peuvent aussi être munis d' organes de récupération des déchets de sarments par soufflerie vers un récipient, en vue d'utiliser ces sarments broyés comme combustible ou en vue de les soumettre à une fermentation anaérobie pour produire du gaz méthane.

Toutefois, l'utilisation comme combustible à l'état broyé s'est avérée peu rentable du fait du coût élevé engendré par la nécessité d'alimenter automatiquement le foyer. Il en va de même de la production de gaz méthane qui est d'un faible rendement et qui exige un matériel complexe et coûteux.

On connaît également, d'après DE-A-3 004 431, une botteleuse de sarments, munie de moyens pour récupérer sur le sol les sarments taillés. Une telle botteleuse, bien qu'offrant l'intérêt de supprimer les tâches de ramassage manuel des sarments sur le sol, reste d'un emploi peu rentable dans la mesure où elle n'est pas jumelée sur un même engin à une tailleuse.

Le document GB-A-2 070 906 décrit quant à lui un engin équipé pour l'arrachage et la mise en fagots de brindilles. Il comprend à cet effet un dispositif d'abattage des brindilles, lesquelles sont ensuite acheminées entre deux courroies jusqu'à une lieuse de brindilles précédée d'un support sur lequel le fagot de brindilles se forme avant liage. Cet engin n'est à l'évidence pas adapté pour traiter des sarments, trop gros pour pouvoir être séparés des pieds de vigne par simple abattage et trop lourds pour pouvoir être transportés entre deux courroies sans chuter sur le sol.

La présente invention a pour objet de remédier aux inconvénients précités grâce à une tailleuse-botteleuse du type spécifié en introduction, équipée d'une botteleuse montée sur l'engin enjambeur et reliée par son entrée audit passage d'évacuation de la tailleuse, par un dispositif de transfert et de soutien des sarments coupés, consistant en un conduit dont le fond est constitué par un convoyeur horizontal, les organes de sectionnement étant de préférence des scies circulaires partiellement sécantes dont les axes s'étendent à l'intérieur et le long de cylindres respectifs délimitant ledit passage d'évacuation, ces cylindres étant munis de doigts étagés tournant à faible vitesse pour entraîner les sarments coupés vers le conduit.

Ainsi, les sarments ne sont plus broyés, mais sectionnés à la longueur déterminée, 50 cm environ à titre d'exemple. Ils ne sont plus abandonnés sur le sol, mais récupérés et mis en bottes par le même appareil qui les taille, avec un transfert fiable entre la tailleuse et la botteleuse. Enfin, ils sont utilisés comme combustible non plus dans des chaudières nécessitant une alimentation automatique, mais dans des foyers rustiques tels que des barbecues qui permettent une simple alimentation manuelle et qui offrent un marché plus ouvert en ce qui concerne le prix de vente.

Dans un mode de réalisation de l'invention auquel il semble qu'il y ait lieu de donner la préférence, le conduit comprend en outre deux flancs latéraux légèrement obliques bordant le convoyeur horizontal, ces flancs latéraux pouvant eux-mêmes avantageusement consister en deux tapis convoyeurs se déplaçant à une vitesse plus élevée que le convoyeur horizontal et dans le même sens que lui.

Ainsi, au cours de leur transfert, les sarments passent automatiquement de la position sensiblement verticale, en sortie de la tailleuse, à la position sensiblement horizontale, requise pour la mise en bottes, juste en amont de l'entrée de la botteleuse.

Pour sa part, la botteleuse renferme un piston transversal, qui est mobile, dans une chambre de tronçonnage formée entre l'entrée pour les sarments et une butée de tronçonnage située en vis-à-vis et porte, au moins sur son bord latéral situé du côté de l'entrée de la chambre de tronçonnage, une lame de cisaillement apte à coopérer avec une contre-lame au-delà de laquelle la chambre de tronçonnage communique avec une chambre de bottelage dans laquelle coulisse un piston longitudinal amenant les sarments bottelés à une lieuse.

Les bottes de sarments ainsi immédiatement liées peuvent être mises sous plastique transparent rétractable en vue de leur commercialisation. Leur emploi ne souffre aucune difficulté et ne nécessite aucun matériel spécialisé.

On peut en outre perfectionner ce mode de réalisation préféré de la tailleuse-botteleuse selon l'invention en vue de parfaire la présentation des bottes de sarments qu'elle produit et de lui conférer une régularité et une continuité optimales de fonctionnement pour en augmenter le rendement.

L'un de ces perfectionnements est constitué par un second convoyeur oblique monté oscillant autour d'un axe transversal horizontal sensiblement perpendiculaire à l'axe longitudinal du convoyeur horizontal, ce second convoyeur étant superposé au convoyeur horizontal et étant maintenu incliné vers le bas en direction de l'entrée de la botteleuse, située entre le convoyeur horizontal et la base du convoyeur oblique, afin d'exercer sur les sarments parvenant à cette dernière une pression constante leur garantissant une pénétration parfaitement ordonnée dans la botteleuse.

Un autre perfectionnement garantissant un tronçonnage à même longueur de tous les sarments ainsi introduits dans la botteleuse réside dans le fait que le piston transversal porte, sur son second bord latéral, une seconde lame de cisaillement apte à coopérer avec une contre-lame respective et située à une certaine distance latérale de la butée de tronçonnage.

En vue de l'évacuation des chutes de sarments produites par ce tronçonnage, la butée de tronçonnage est avantageusement réalisée sous la forme d'une porte basculante immobilisée dans la position rétractée du piston transversal et accouplée à des moyens de manoeuvre, tels qu'une roulette coopérant avec une came, conçus pour l'ouvrir en synchronisme avec le mouvement d'avance du piston transversal, le convoyeur horizontal se prolongeant en outre à l'intérieur de la chambre de tronçonnage jusqu'au-delà de la porte basculante.

De préférence, la porte basculante est articulée autour d'un axe parallèle à la direction de déplacement du piston transversal et lesdits moyens de manoeuvre comprennent sur le flanc de ce dernier une roulette et sur la porte une came longitudinale qui, à partir de son bord d'attaque sur lequel la roulette s'appuie dans la position rétractée du piston, s'étend sur toute la longueur de la porte en se redressant légèrement sous une forme hélicoïdale.

Par ailleurs, pour assurer la continuité du fonctionnement de la botteleuse, il sera avantageux de prévoir entre les chambres de tronçonnage et de bottelage de cette dernière, une paroi mobile relevable cycliquement. En effet, pendant que le bottelage d'un paquet de sarments tronçonnés se fait d'un côté de cette paroi, un autre paquet de sarments peut être tronçonné de l'autre côté, puis après achèvement du bottelage du précédent et relevage de cette paroi, être instantanément repoussé dans la chambre de bottelage par le piston.

Enfin, pour assure la production de bottes de sarments parfaitement cylindriques, la chambre de bottelage sera de préférence formée par une cavité hémicylindrique située en contre-bas du fond de la chambre de tronçonnage et coiffée d'une voûte hémi-cylindrique relevable conjointement avec la paroi mobile.

Selon un autre mode de réalisation de l'invention, le conduit est constitué par deux parois latérales verticales en forme de peigne permettant le dégagement des doigts étagés et la botteleuse est formée par deux tapis tournant chacun sur au moins un rouleau d'entrée, un rouleau de sortie et un rouleau de renvoi, d'axes verticaux, montés sur deux platines articulées sur l'axe des rouleaux d'entrée et rappelés élastiquement l'un vers l'autre, des moyens étant prévus pour inverser le sens de rotation de l'un des tapis lorsque la botte est formée.

De préférence, deux portes articulées sur l'axe des rouleaux d'entrée sont alors prévues pour fermer l'entrée de la botteleuse lorsque le sens de rotation de l'un des tapis est inversé.

Ces modes de réalisation de l'invention sont maintenant décrits à titre d'exemples non limitatifs en référence aux dessins annexés dans lesquels :
- la figure 1 est une vue en perspective avec arrachement partiel d'une tailleuse-botteleuse conforme à l'invention :
- les figures 2, 3 et 4 sont des vues de dessus schématiques d'une deuxième tailleuse-botteleuse conforme a l'invention dans trois phases de son fonctionnement :
- la figure 5 est une vue en perspective avec arrachement partiel d'une troisième tailleuse-botteleuse conforme à l'invention ;
- la figure 6 est une vue en coupe longitudinale de son conduit et du convoyeur oscillant associé :
- la figure 7 est une vue en plan intérieure d'une partie de sa botteleuse : et
- la figure 8 est une vue en coupe longitudinale de la partie restante de cette botteleuse.

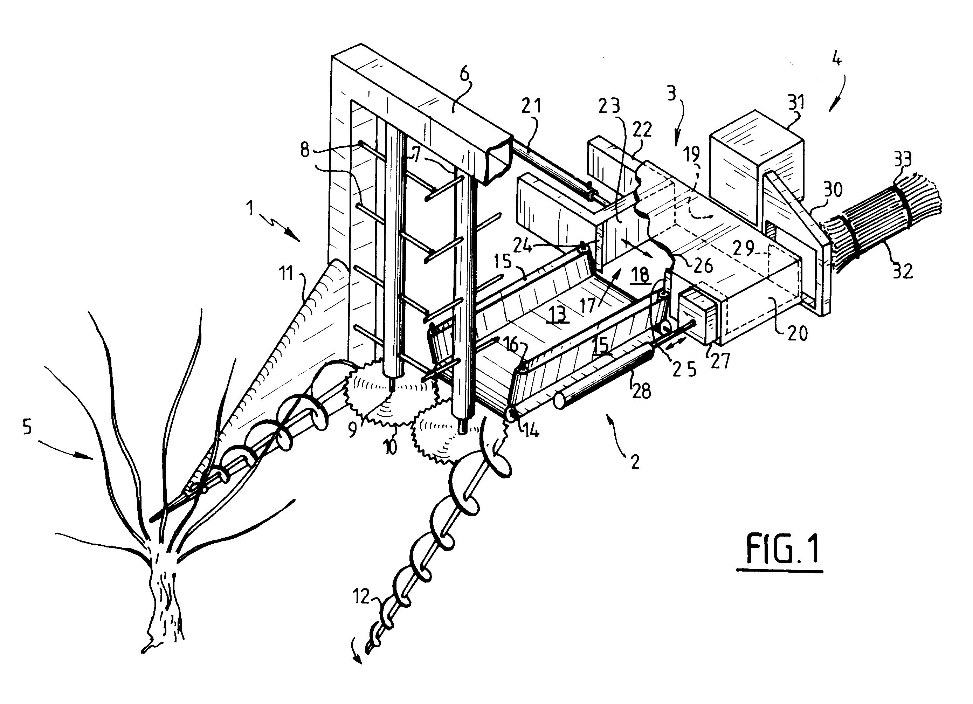

La tailleuse-botteleuse représentée en figure 1 comporte successivement une tailleuse 1 suivie d'un conduit 2, puis d'une botteleuse 3 et enfin d'une lieuse 4, l'ensemble étant monté sur un engin apte à circuler sur les vignes à tailler telles que 5, engin parfaitement classique qui n'a pas été représenté aux dessins pour des raisons de clarté et de simplicité.

La tailleuse 1 est formée d'un châssis 6 sous la traverse supérieure duquel sont montés deux cylindres 7 portant des doigts 8, cylindres traversés par les axes 9 de deux scies circulaires 10 partiellement sécantes. Les moteurs entraînant les cylindres 7 à faible vitesse et les axes 9 à plus grande vitesse sont portés par le châssis 6 qui reçoit également sur l'avant deux andains latéraux, dont l'un est visible en 11, avantageusement doublés par des vis sans fin ameneuses 12. On conçoit que lorsque l'engin se déplace sur les vignes 5, les sarments de ces vignes sont taillés par les scies cirulaires 10 après avoir été redressés par les vis sans fin 12 et guidés par les andains 11. Ils sont ensuite entraînés par les doigts 8 vers le conduit 2.

Ce conduit se compose d'un convoyeur horizontal 13 dont au moins l'un des rouleaux 14 est entraîné en rotation et de deux convoyeurs latéraux 15 légèrement obliques pour former gouttière, dont au moins l'un des rouleaux 16 est également entraîné en rotation, mais à une vitesse supérieure de façon à aligner les sarments qui auraient pu tomber de travers.

Ainsi, les sarments taillés par les scies 10 sont amenés alignés vers la botteleuse 3.

La botteleuse 3 comprend une chambre de tronçonnage 17 dont le fond 18 porte une butée de tronçonnage 19 et une butée transversale 20 légèrement décalée vers l'extérieur. Dans la chambre de tronçonnage 17, se déplace, sous l'impulsion d'un vérin hydraulique 21, un piston transversal de cisaillement 22 réalisé ici en forme de U dont la face active transversale 23 reçoit une lame de cisaillement 24 qui coopère avec une contre-lame de cisaillement 25.

En position d'ouverture de la botteleuse, les deux lames 24 et 25 sont situées de part et d'autre de la sortie du conduit 2. Lorsque suffisamment de sarments ont été amenés dans la chambre de tronçonnage 17, le piston 22 est mis en mouvement par le vérin 21 et les sarments qui sont trop longs et qui ont atteint la butée de tronçonnage 19 sont cisaillés par la lame 24 et la contre-lame 25, puis une botte est formée entre le piston et la butée transversale 20. Cette botte se trouve ainsi enfermée entre le fond 18 de la chambre 17, la butée transversale 20 et la face 23 du piston 22 qui forment un espace clos avec la tôle 26 recouvrant la botteleuse.

L'ensemble 3 est complété par un piston longitudinal 27 qu'un vérin longitudinal 28 permet de déplacer dans cet espace clos face à une ouverture de sortie 29 prévue dans la butée de tronçonnage 19. Un déplacement du piston longitudinal 27 amène ainsi la botte de sarments vers la lieuse 4 qui peut être de tout type connu et dont on n'a donc représenté que l'anneau de cerclage 30 et sa commande 31. On obtient ainsi finalement des bottes telles que 32 cerclées par des liens 33 qui peuvent éventuellement être ensuite conditionnées dans des emballages plastiques transparents en vue de leur commercialisation.

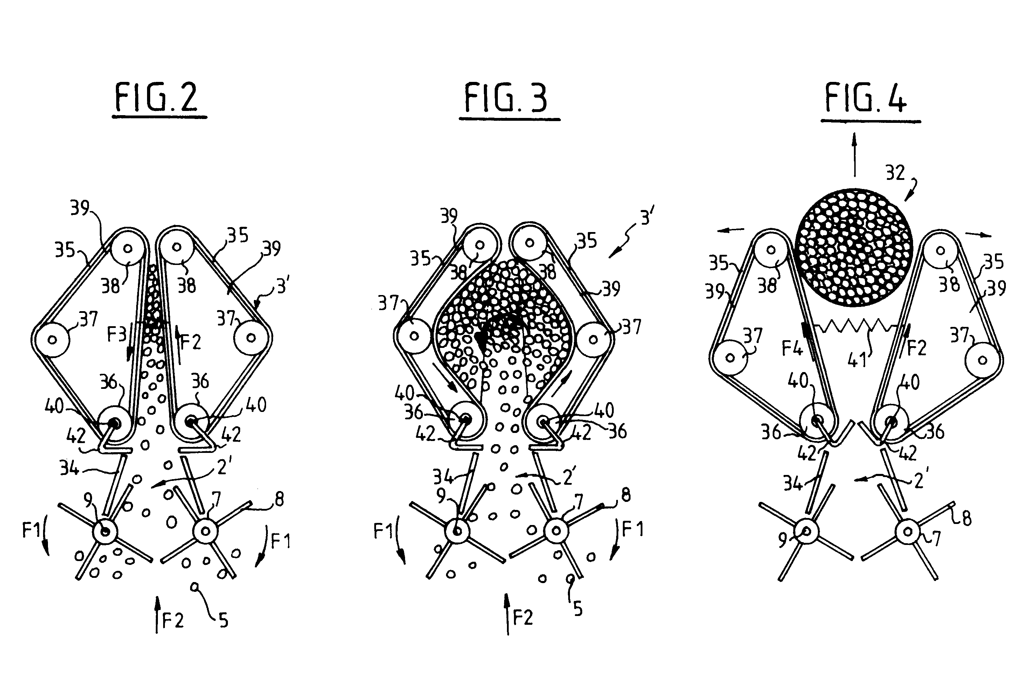

Le mode de réalisation représenté aux figures 2, 3 et 4 sous forme schématique fait usage des mêmes cylindres 7 pour entraîner des doigts 8 tournant selon flèches F1 au-dessus des scies dont on voit les axes 9. Les sarments S ainsi sciés sont amenés par les doigts entre deux parois latérales verticales en forme de peigne 34 formant le conduit 2' jusqu'à la botteleuse 3'. La lieuse qui peut être du même type que précédemment n'a pas été représentée.

La botteleuse est ici constituée par deux tapis roulants 35 portés chacun par trois rouleaux 36, 37, 38 verticaux à leur tour montés sur deux platines 39 articulées sur les axes 40 des rouleaux d'entrée 36.

Les rouleaux de sortie 38 sont voisins l'un de l'autre lorsque les platines sont rappelées élastiquement l'une vers l'autre par un fort organe élastique tel que 41 et les rouleaux de renvoi 37 forment avec les précédents un triangle légèrement ouvert.

L'ensemble est complété par deux portes 42 articulées sur l'axe 40 et qui peuvent passer de la position effacée de la figure 2 à la position de fermeture de la figure 4.

Des organes moteurs non représentés permettent d'entraîner l'un des tapis roulants, celui de droite selon les figures, dans un seul sens de rotation représenté par la flèche F2 et l'autre tapis roulant, soit dans le sens de rotation représenté par la flèche F3 aux figures 2 et 3, soit dans le sens de rotation représenté ouvert représenté par la flèche F4 à la figure 4.

Au fur et à mesure que l'engin portant cette tailleuse-botteleuse se déplace sur les vignes, les sarments S taillés par les scies sont amenés par les doigts 8 le long des parois latérales 34 du conduit 2' à travers les portes 42 ouvertes et enfin entre les tapis 39 qui, tournant dans le sens des flèches F2 et F3, forment une botte que l'on voit constituée à la figure 3.

Lorsque l'espace disponible entre les tapis roulants est entièrement occupé, l'utilisateur ou une commande automatique, inverse le sens de rotation du tapis roulant de gauche et ferme les portes 42. On se trouve alors dans la position de la figure 4 pour laquelle la botte 32 formée et en cours de liaison a obligé les platines 39 à s'écarter à l'encontre du ressort 41, puisqu'elle est poussée par les deux tapis se déplaçant l'un parallèlement à l'autre.

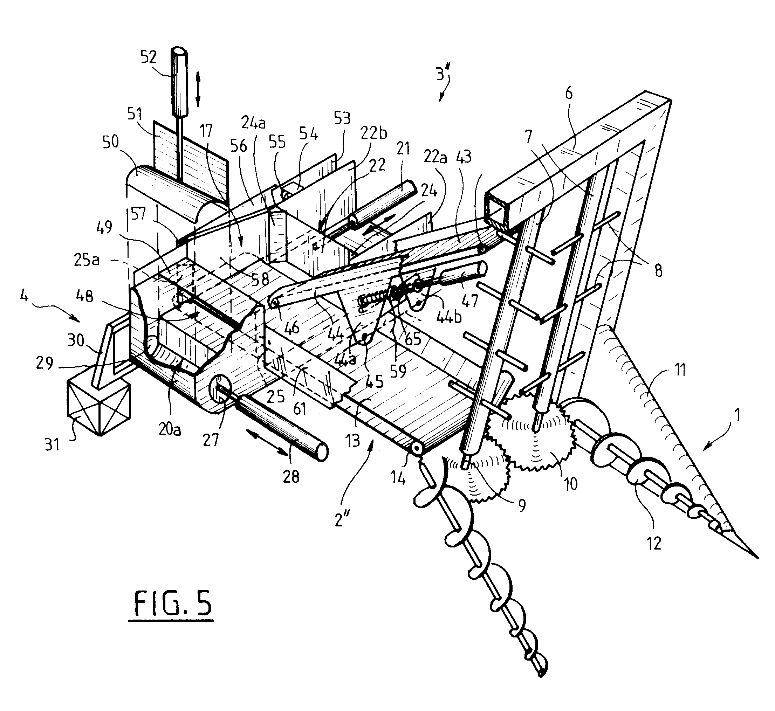

La figure 5 illustre une troisième tailleuse-boteleuse selon l'invention, qui est en fait une version perfectionnée de celle de la figure 1, dont elle reprend les éléments structurels de base identifiés sur les deux figures par les mêmes références numériques.

C'est ainsi que l'on retrouve à l'avant de cette troisième tailleuse-botteleuse, la tailleuse 1 de la première, suivie d'un conduit 2'' amenant les sarments coupés dans la chambre de tronçonnage 17 d'une botteleuse arrière 3'', dans laquelle un piston transversal de cisaillement 22 en forme de U peut être animé, par un vérin 21, d'un mouvement de va-et-vient sensiblement perpendiculaire à la direction de défilement d'un convoyeur horizontal 13 constituant le fond du conduit 2''.

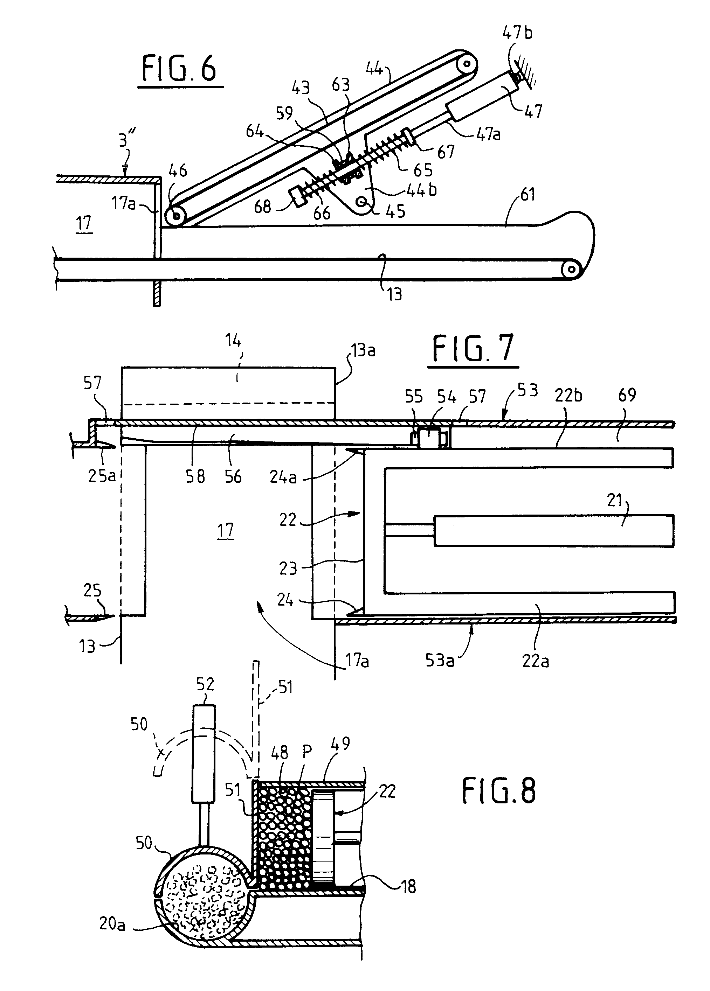

Le conduit 2'' de la troisième tailleuse-botteleuse se distingue de celui 2 de la première par le fait tout d'abord que son convoyeur horizontal 13 pénètre dans la chambre de tronçonnage 17, dont il constitue une partie du fond, et se prolonge même légèrement au-delà de la paroi arrière 53 de cette dernière, comme représenté en 13a sur la figure 7, ses deux flancs latéraux, constitués ici par de simples tôles légèrement obliques 61, s'arrêtant en outre au niveau de l'entrée de la chambre de tronçonnage 17.

Un autre perfectionnement de la tailleuse-botteleuse de la figure 5 réside dans la présence, à la verticale du convoyeur horizontal 13, d'un second convoyeur 43 s'inclinant en direction de l'entrée de la chambre de tronçonnage 17 de la botteleuse 3''. Grâce à deux joues latérales 44a, 44b prolongeant son châssis 44 vers le bas et s' articulant sur le bâti non représenté de la tailleuse-botteleuse, le convoyeur incliné 43 peut pivoter autour d'un axe 45 sensiblement perpendiculaire à la direction de défilement du convoyeur horizontal 13, sous l'action d'un vérin 47 agissant par sa tige 47a sur une barre 59 réunissant les deux joues 44a, 44b.

La figure 6 montre plus précisément que la tige 47a du vérin 47, lequel prend appui en 47b sur le bâti de la tailleuse-botteleuse, passe librement à travers une ouverture de la barre 59, bordée de chaque côté de cette dernière par une platine annulaire 63 ou 64. Deux ressorts hélicoïdaux 65, 66 sont en outre interposés, l'un entre la platine 63 tournée vers le vérin 47 et une collerette 67 solidaire de la tige 47a de ce dernier et l'autre entre la seconde platine 64 et une butée 68 fixée à l'extrémité de cette tige.

En se reportant maintenant aux figures 5 et 7, on peut voir que le piston de cisaillement 22 de la chambre de tronçonnage 17 de la botteleuse 3'' est muni, sur chacun des bords verticaux de sa face active transversale 23, d'une lame de cisaillement 24 ou 24a dirigée vers une contre-lame respective 25 ou 25a située de l'autre côté de l'entrée 17a de la chambre 17. La figure 7 montre par ailleurs que le flanc arrière 22b de ce piston délimite avec la paroi arrière 53 de la chambre de tronçonnage un couloir 69 dans lequel fait sailllie une roulette 55, montée libre en rotation sous une potence latérale 54 de ce flanc, non loin de l'angle supérieur de ce dernier proche de la lame de cisaillement 24a.

On peut encore voir sur les figures 5 et 7 que la partie de la paroi arrière 53 de la chambre de tronçonnage 17, qui est située en face de l'entrée 17a de cette dernière, est formée par une porte basculante 58 articulée par son bord supérieur autour d'un axe horizontal 57 et couvrant au moins toute la largeur du convoyeur horizontal 13 qui passe au-dessous d'elle. La porte 58 est munie, sur toute la longueur de sa face intérieure et légèrement en dessous de son axe d'articulation 57, d'une came longitudinale 56 qui, depuis un bord d'attaque sur lequel s'appuie la roulette 55 dans la position rétractée du piston 22 représentée sur la figure 5, se redresse légèrement sous une forme hélicoïdale jusqu'à l'autre bout de la porte 58. Dans la position rétractée du piston, la porte 58 immobilisée en position verticale joue le rôle de la butée de tronçonnage 19 de la botteleuse de la figure 1.

La figure 8 montre quant à elle que la chambre de tronçonnage 17 se prolonge sur une certaine distance au-delà des contre-lames 25, 25a jusqu'à une paroi mobile verticale 51, sensiblement parallèle à la face active 23 du piston de cisaillement 22. De l'autre côté et le long de son bord inférieur, cette paroi mobile 51 est solidaire d'une voûte hémicylindrique 50, sur laquelle agit un vérin 52 destiné à la relever ou à l'abaisser conjointement avec la paroi mobile 51. Cette voûte 50 coiffe une cavité de bottelage 20a à fond hémicylindrique, formée en contre-bas du fond 18 de la chambre de tronçonnage 17 avec laquelle elle communique lorsque la paroi mobile 51 est relevée, comme représenté sur la figure 5. On forme ainsi, avec des prolongements des parois arrière 53 et avant 53a de la chambre de tronçonnage 17, une chambre de bottelage cylindrique qui, tout comme sur la figure 1, renferme d'un côté un piston longitudinal 27 accouplé à son vérin d'actionnement extérieur 28 et s'ouvre de l'autre côté en 29 sur l'anneau de cerclage 30 de la lieuse 4 représenté avec sa commande 31.

Munie d'un dispositif approprié de commande séquentielle de ses différents organes moteurs, la tailleuse-botteleuse qui vient d'être décrite fonctionne de la manière suivante.

Au départ, le piston de cisaillement 22 étant dans sa position rétractée comme sur la figure 5 et la paroi mobile 51 dans sa position basse représentée en trait plein sur la figure 8, le convoyeur 43, dont le brin inférieur défile dans le même sens que le brin supérieur du convoyeur horizontal 13 acheminant de façon désordonnée les sarments, est placé par le vérin 47 sous une inclinaison telle que son nez inférieur 46 exerce en continu sur ces derniers une pression maintenue constante grâce à la possibilité d'oscillation du convoyeur incliné 43 autour de l'axe 45, combinée à l'action compensatrice des ressorts 65, 66, Le convoyeur incliné 43, en intervenant de cette façon sur les sarments, fait que ces derniers pénètrent de façon ordonnée dans la chambre de tronçonnage pour être amenés, par le convoyeur 13, en butée contre la porte basculante 58 immobilisée en position verticale.

A l'étape suivante, le piston de cisaillement 22 est propulsé par son vérin 21 pour tronçonner les sarments à leurs deux bouts, entre ses lames 24, 24a coopérant avec les contre-lames 25, 25a, au-delà desquelles le paquet P de sarments ainsi tronçonnés à même longueur est poussé contre la paroi mobile 51 par le piston 22, comme représenté en trait plein sur la figure 8. Les sarments tronçonnés sont ainsi maintenus en réserve, jusqu'à ce que la chambre de bottelage soit libérée, à l'intérieur d'une chambre intermédiaire ou sas 48 délimité par le piston 22, la paroi mobile 51, le fond 18 de la chambre de tronçonnage et une paroi supérieure 49. Au cours du mouvement d'avance du piston 22, la roulette 55 portée par le flanc arrière 22b de ce dernier, roule sur la came hélicoïdale 56 de la porte 58 et la force ainsi à s'ouvrir, par basculement vers l'arrière autour de son axe 57, pour permettre aux chutes de sarments d'être évacuées vers l'extérieur par le convoyeur horizontal 13 toujours en mouvement. De l'autre côté, le flanc avant 22a du piston 22, prévu suffisamment long à cette fin, vient complètement obturer l'entrée 17a de la chambre de tronçonnage 17, maintenant ainsi en réserve contre sa face extérieure un paquet de sarments bruts entre-temps amenés par le convoyeur horizontal 13, le convoyeur incliné ayant quant à lui été relevé par le vérin 47, à l'arrivée du piston 22 dans sa position de fin de course.

A l'étape suivante, la paroi mobile 51 est relevée par le vérin 52 avec la voûte 50 et le piston 22, dont le vérin 21 est toujours en pression, pousse instantanément dans la cavité de bottelage 20a, le paquet P de sarments tronçonnés, comme représenté en traits interrompus sur la figure 8. Dans l'instant qui suit, la paroi mobile 51 est rabaissée, la voûte 50 venant alors coiffer la cavité 20a, et simultanément le piston 22 est rétracté par le vérin 21, autorisant ainsi le paquet de sarments bruts en attente sur le convoyeur 13 à pénétrer dans la chambre de tronçonnage 17 pour y être sectionné puis repoussé par le piston 22 contre la paroi 51 de la façon décrite plus haut. Ainsi, pendant que, d'un côté de cette paroi 51, un paquet P de sarments tronçonnés est mis en botte et ficelé sous une forme parfaitement cylindrique dans la chambre de bottelage et dans la lieuse 4, de l'autre côté, le paquet suivant est préparé en vue de cette double opération, prêt à être poussé dans la cavité dès le relevage de la paroi mobile 51 et un troisième paquet de sarments destinés à être tronçonnés est maintenu en attente par le convoyeur 13 contre le flanc avant 22a du piston 22.

On constate donc que la troisième tailleuse-botteleuse selon l'invention est dotée d'un cycle de fonctionnement continu sans perte de temps entre les opérations d'introduction dans la botteleuse 3'', de tronçonnage et de bottelage des paquets successifs, si bien que le rendement global de la tailleuse-botteleuse est optimal. De plus, cette tailleuse-botteleuse est d'un fonctionnement parfaitement régulier et fiable, essentiellement grâce à l'introduction ordonnée des sarments dans la botteleuse. Elle produit en outre des bottes de sarments parfaitement cylindriques, ayant une longueur et un diamètre constants, ce qui améliore considérablement leur présentation commerciale.

## Revendications

1. Tailleuse-botteleuse de sarments comportant, sur un engin enjambeur apte à circuler sur des arbustes à tailler (5), une tailleuse (1) formée de dispositifs ameneurs (11) associés à des organes de sectionnement (10) eux-mêmes suivis d'un passage d'évacuation des sarments coupés, caractérisée en ce qu'elle comprend en outre une botteleuse (3, 3', 3'') montée sur l'engin enjambeur et reliée par son entrée audit passage d'évacuation de la tailleuse, par un dispositif de transfert et de soutien des sarments coupés, consistant en un conduit (2, 2', 2'') dont le fond est constitué par un convoyeur horizontal (13).

2. Tailleuse-botteleuse selon la revendication 1, caractérisée en ce que les organes de sectionnement (10) sont des scies circulaires partiellement sécantes dont les axes (9) s'étendent a l'intérieur et le long de cylindres respectifs (7) délimitant ledit passage d'évacuation, ces cylindres étant munis de doigts étagés (8) tournant à faible vitesse pour entraîner les sarments coupés vers le conduit (2, 2', 2'').

3. Tailleuse-botteleuse selon la revendication 1 ou 2, caractérisée en ce que le conduit (2, 2'') comprend en outre deux flancs latéraux (15 ; 61) légèrement obliques bordant le convoyeur horizontal (13).

4. Tailleuse-botteleuse selon la revendication 3, caractérisée en ce que les deux flancs latéraux du conduit (2) sont constitués par des tapis convoyeurs (15) se déplaçant à une vitesse plus élevée que le convoyeur horizontal (13) et dans le même sens que lui.

5. Tailleuse-botteleuse selon l'une quelconque des revendications 1 à 4, caractérisée en ce qu'un second convoyeur oblique (43) est monté oscillant autour d'un axe transversal horizontal (45) sensiblement perpendiculaire à l'axe longitudinal du convoyeur horizontal (13), ce second convoyeur étant superposé au convoyeur horizontal (13) et étant maintenu incliné vers le bas en direction de l'entrée (17a) de la botteleuse, située entre le convoyeur horizontal et la base du convoyeur oblique.

6. Tailleuse-botteleuse selon l'une des revendications 1 à 5, caractérisée en ce que la botteleuse (3 ; 3'') renferme un piston transversal (22), qui est mobile, dans une chambre de tronçonnage (17), formée entre l'entrée (17a) pour les sarments et une butée de tronçonnage (19 : 58) située en vis-à-vis et porte, au moins sur son bord latéral situé du côté de l'entrée (17a) de la chambre de tronçonnage, une lame de cisaillement (24) apte à coopérer avec une contre-lame (25) au-delà de laquelle la chambre de tronçonnage (17) communique avec une chambre de bottelage dans laquelle coulisse un piston longitudinal (27) amenant les sarments bottelés à une lieuse (4).

7. Tailleuse-botteleuse selon la revendication 6, caractérisée en ce que le piston transversal (22) porte sur son second bord latéral une seconde lame de cisaillement (24a) apte à coopérer avec une contre-lame respective (25a), et située à une certaine distance latérale de la butée de tronçonnage (58).

8. Tailleuse-botteleuse selon la revendication 7, caractérisée en ce que la butée de tronçonnage est réalisée sous la forme d'une porte basculante (58) immobilisée dans la position rétractée du piston transversal (22) et accouplée à des moyens de manoeuvre, tels qu'une roulette (55) coopèrant avec une came (56) conçus pour l'ouvrir en synchronisme avec le mouvement d'avance du piston transversal (22), le convoyeur horizontal (13) se prolongeant en outre à l'intérieur de la chambre de tronçonnage (17) jusqu'au-delà de la porte basculante (58).

9. Tailleuse-botteleuse selon la revendication 8, caractérisée en ce que la porte basculante (58) est articulée autour d'un axe (57) parallèle à la direction de déplacement du piston transversal (22) et lesdits moyens de manoeuvre comprennent, sur le flanc (22b) de ce dernier, une roulette (55) et, sur la porte (58), une came longitudinale (56) qui, à partir de son bord d'attaque sur lequel la roulette s'appuie dans la position rétractée du piston (22), s'étend sur toute la longueur de la porte en se redressant légèrement sous une forme hélicoïdale.

10. Tailleuse-botteleuse selon l'une quelconque des revendications 6 à 9, caractérisée en ce qu'entre la chambre de bottelage (20a, 50) et la chambre de tronçonnage (17), est disposée une paroi mobile (51) relevable cycliquement

11. Tailleuse-botteleuse selon la revendication 10, caractérisée en ce que la chambre de bottelage est formée par une cavité hémi-cylindrique (20a) située en contre-bas du fond (18) de la chambre de tronçonnage (17) et coiffée d'une voûte hémi-cylindrique (50) relevable conjointement avec la paroi mobile (51).

12. Tailleuse-botteleuse selon la revendication 2, caractérisée en ce que le conduit est constitué par deux parois latérales verticales (34) en forme de peigne permettant de dégagement des doigts étagés (8) en vue de l'acheminément des sarments coupés vers la bottleleuse.

13. Tailleuse-botteleuse selon l'une quelconque des revendications 1 à 5 et 12, caractérisée en ce que la botteleuse (3') est formée par deux tapis (35) tournant chacun sur au moins un rouleau d'entrée (36), un rouleau de sortie (38) et un rouleau de renvoi (37), d'axes verticaux, montés sur deux platines (39) articulées sur l'axe (40) des rouleaux d'entrée (36) et rappelées élastiquement (41) l'une vers l'autre, des moyens étant prévus pour inverser le sens de rotation de l'un des tapis lorsque la botte (32) est formée.

14. Tailleuse-botteleuse selon la revendication 13, caractérisée en ce que deux portes (42) articulées sur l'axe (40) des rouleaux d'entrée sont prévues pour fermer l'entrée de la botteleuse lorsque le sens de rotation de l'un des tapis est inversé.

## Claims

1. Cutting and collecting apparatus for vines comprising, on a straddling tractor capable of moving over the bushes to be cut (5), a cutting apparatus (1) formed of guiding devices (11) associated with cutting devices (10) themselves followed by a removal passage for the cut vines, characterized in that it also comprises a collecting apparatus (3, 3', 3'') mounted on the straddling tractor and connected at its inlet to the said removal passage of the cutting apparatus, by a transfer and support device for the cut vines, comprising a channel (2, 2', 2'') the bottom of which is constituted by a horizontal conveyor (13).

2. Cutting and collecting apparatus according to Claim 1, characterized in that the cutting devices (10) are partially secant circular saws the shafts (9) of which extend inside and along respective cylinders (7) delimiting the said removal passage, these cylinders being equipped with tiered pins (8) rotating at low speed to draw the cut vines towards the channel (2, 2', 2'').

3. Cutting and collecting apparatus according to Claims 1 or 2, characterized in that the channel (2, 2'') also comprises two slightly oblique lateral sides (15; 61) bordering the horizontal conveyor (13).

4. Cutting and collecting apparatus according to Claim 3, characterized in that the two lateral sides of the channel (2) are constituted by conveyor belts (15) moving at a higher speed than the horizontal conveyor (13) and in the same direction.

5. Cutting and collecting apparatus according to one of Claims 1 to 4, characterized in that a second oblique conveyor (43) is mounted so that it oscillates round a horizontal transverse shaft (45) substantially perpendicular to the longitudinal axis of the horizontal conveyor (13), this second conveyor being superimposed on the horizontal conveyor (13) and being maintained inclined downwards in the direction of the inlet (17a) of the collecting apparatus, located between the horizontal conveyor and the base of the oblique conveyor.

6. Cutting and collecting apparatus according to one of Claims 1 to 5, characterized in that the collecting apparatus (3; 3'') comprises a transverse piston (22), which moves inside a cutting chamber (17), formed between the inlet (17a) for the vines and a stop (19; 58) located opposite and carries, at least on its lateral edge located on the side of the inlet (17a) of the cutting chamber, a shearing blade (24) capable of cooperating with a counter-blade (25) beyond which the cutting chamber (17) communicates with a collecting chamber in which slides a longitudinal piston (27) guiding the collected vines to a binder (4).

7. Cutting and collecting apparatus according to Claim 6, characterized in that the transverse piston (22) carries on its second lateral edge a second shearing blade (24a) capable of cooperating with a respective counter-blade (25a) and located a certain lateral distance from the cutting stop (58).

8. Cutting and collecting apparatus according to Claim 7, characterized in that the cutting stop takes the form of a tipping door (58) which is immobilized when the transverse piston (22) is in the retracted position and is coupled to operating means such as a roller (55) cooperating with a cam (56) designed to open it in synchronization with the travel of the transverse piston (22), the horizontal conveyor (13) also extending inside the cutting chamber (17) beyond the tipping door (58).

9. Cutting and collecting apparatus according to Claim 8, characterized in that the tipping door (58) is articulated on the side (22b) of the latter, a roller (55) and, on the door (58), a longitudinal cam (56) which, from its leading edge on which the roller rests when the piston (22) is retracted, extends the entire length of the door and is raised up slightly in a spiral shape.

10. Cutting and collecting apparatus according to one of Claims 6 to 9, characterized in that a cyclically liftable movable wall (51) is arranged between the collecting chamber (20a, 50) and the cutting chamber (17).

11. Cutting and collecting apparatus according to Claim 10, characterized in that the collecting chamber is formed by a semi-cylindrical cavity (20a) situated below the bottom (18) of the cutting chamber (17) and covered by a semi-cylindrical canopy (50) which is liftable in conjunction with the movable wall (51).

12. Cutting and collecting apparatus according to Claim 2, characterized in that the channel consists of two vertical lateral walls (34) in the form of a comb enabling the tiered pins (8) to be released so that the cut vines can be guided towards the collecting apparatus.

13. Cutting and collecting apparatus according to one of Claims 1 to 5 and 12, characterized in that the collecting apparatus (3') is formed by two belts (35) each rotating on at least one inlet roller (36), one outlet roller (38) and one return roller (37), with vertical shafts, mounted on two plates (39) articulated on the shaft (40) of the inlet rollers (36) and flexibly drawn back (41) one towards the other, means being provided to reverse the direction of rotation of one of the belts when the bundle (32) is formed.

14. Cutting and collecting apparatus according to Claim 13, characterized in that two doors (42) articulated on the shaft (40) of the inlet rollers are provided to close the inlet to the collecting apparatus when the direction of rotation of one of the belts is reversed.

## Patentansprüche

1. Schneid- und Sammelvorrichtung für Weinreben mit einer Greifeinrichtung zum Umgreifen der abzuschneidenden Stauden (5), einer Schneideeinrichtung (1), die aus Zuführeinrichtungen (11) in Verbindung mit Schneidwerkzeugen (10) gebildet ist und an welche sich ein Förderband für die abgeschnittenen Reben anschließt, **dadurch gekennzeichnet**, daß eine Bündeleinrichtung (3', 3'') vorgesehen ist, die auf der Greifeinrichtung montiert ist und die über ihren Eingang mit dem Förderband der Schneidvorrichtung mittels einer Überführ- und Stützeinheit für geschnittene Reben, bestehend aus einer Führung (2,2',2''), deren Boden durch ein horizontales Förderband (13) gebildet ist, verbunden ist.

2. Schneid- und Sammelvorrichtung für Weinreben nach Anspruch 1, **dadurch gekennzeichnet**, daß die Schneidwerkzeuge (10) Rundsägen sind, die teilweise schneiden, deren Achsen (9) sich nach innen und über die Länge entsprechender Zylinder (7) erstrecken, welche an das Förderband angrenzen, wobei diese Zylinder stufenartig mit Greiffingern (8) ausgerüstet sind und sich mit geringer Geschwindigkeit drehen, um die geschnittenen Reben zur Führung (2,2',2'') hinzuführen.

3. Schneid- und Sammelvorrichtung für Weinreben nach Anspruch 1 oder 2, **dadurch gekennzeichnet**, daß die Führung (2,2') mindestens zwei seitliche Führungen (15;61) umfaßt, die leicht schräg das horizontale Förderband (13) begrenzen.

4. Schneid- und Sammelvorrichtung für Weinreben nach Anspruch 3, **dadurch gekennzeichnet**, daß die beiden seitlichen Führungen (15;61) der Führung (2) aus Transportbändern (15) bestehen, die sich mit schnellerer Geschwindigkeit als das honizontale Transportband (13) und in der selben Richtung bewegen.

5. Schneid- und Sammelvorrichtung nach einem der Ansprüche 1 - 4, **dadurch gekennzeichnet**, daß ein geneigtes zweites schräg um eine horizontale Querachse (45) schwenkbares Förderband (43) rechtwinklig zur Längsachse des horizontalen Förderbandes (13) verlaufend angeordnet ist, wobei dieses zweite Förderband oberhalb des horizontalen Förderbandes (13) angebracht ist und nach unten geneigt in Richtung zur Zuführung (17a) der Schneid- und Sammelvorrichtung zwischen dem horizontalen Transportband und dem unteren Ende des schrägen Förderbandes angeordnet ist.

6. Schneid- und Sammelvorrichtung nach Anspruch 1 - 5, **dadurch gekennzeichnet**, daß die Sammelvorrichtung (3,3'') einen Querkolben (22) umfaßt, der in einer Schneidekammer (17) zwischen der Zuführung (17a) für die Reben und einem Schneide-Gegenlager (19,58) die einander gegenüberliegend angeordnet sind, bewegbar angebracht ist, und der Querkolben (22) zumindest auf seinem seitlichen der Zuführung (17a) der Schneidekammer zugewandten Rand eine Schneideklinge (24) aufweist, die so ausgerichtet ist, daß sie mit einer Gegenklinge (25) zusammenwirkt, über welche die Schneidekammer (17) mit einer Bündelkammer verbunden ist, in die der Querkolben (22) in Langsrichtung (27) verschiebbar ist und dabei die gebündelten Reben zu einer Bündelvorrichtung (4) mitnimmt.

7. Schneid- und Sammelvorrichtung nach Anspruch 6, **dadurch gekennzeichnet**, daß der Querkolben (22) auf seinem Rand in Längsrichtung eine zweite Schneidklinge (24a) aufweist, die so ausgerichtet ist, daß sie mit einer entsprechenden Gegenklinge (25a) zusammenwirkt, die in einem bestimmten Abstand in Längsrichtung der Kante der Zuführung (58) angeordnet ist.

8. Schneid- und Sammelvorrichtung nach Anspruch 7, **dadurch gekennzeichnet**, daß das Gegenlager der Schneidevorrichtung in Form einer Kipptüre (58) ausgebildet ist, die in der zurückgezogenen Kolbenstellung unbeweglich ist, und die mittels Bewegungshilfen, wie einem Laufrad (55), das mit einer Lauffläche (56) zusammenwirkt, ausgestattet ist, um synchron mit der Vorwärtsbewegung des Querkolbens(22) zu öffnen, wobei sich das horizontale Förderband (3) zumindest ins innere der Schneidekammer (17) bis zu der Kipptüre (58) erstreckt.

9. Schneid- und Sammelvorichtung nach Anspruch 8, **dadurch gekennzeichnet**, daß die Kipptüre (58) auf einer Achse (57) gelagert ist, die parallel zur Bewegungsrichtung des Querkolbens (22) ist und die Bewegungsmittel ein auf der Seite (22b) des Querkolbens (22) angeordnetes Laufrad (55) und eine auf der Kipptüre (58) längs verlaufende Lauffläche (56) ist, auf welcher sich das Laufrad in der zurückgezogenen Stellung des Querkolbens (22) abstützt und welche leicht gewunden über die ganze Länge der Kipptüre (58) ausgebildet ist.

10. Schneid- und Sammelvorichtung für Weinreben nach einem der Anprüche 6 - 9, **dadurch gekennzeichnet**, daß zwischen der Bündelkammer (20a,50) und der Schneidekammer (17) eine taktweise anhebbare, bewegliche Trennwand (51) angeordnet ist.

11. Schneid- und Sammelvorrichtung nach Anspruch 10, **dadurch gekennzeichnet**, daß die Bündelkammer als eine halbzylinderförmige Höhlung (20a) ausgebildet ist, die unterhalb des Bodens (18) der Schneidekammer (17) angeordnet ist und von einer zusammmen mit der beweglichen Innnenwand (51) anhebbaren halb-zylinderförmigen Rundung (50) abgedeckt ist.

12. Schneid- und Sammelvorrichtung nach Anspruch 2, **dadurch gekennzeichnet**, daß die Führung aus zwei kammförmigen vertikalen Seitenwänden (34) besteht, die ein Aushängen der Greiffinger (8) während der Beförderung der geschnittenen Reben zur Bündelkammer ermöglichen.

13. Schneid- und Sammelvorrichtung nach einem der Ansprüche 1 - 5 und 12, **dadurch gekennzeichnet**, daß die Bündelkammer (3') durch zwei Förderbänder (35) gebildet ist, wobei jedes zumindest um eine Zuführungsrolle (36), um eine Ausgangsrolle (38) und um eine Rückführungsrolle (37), mit jeweils vertikalen Achsen umläuft, welche Förderbänder auf zwei um die Achse (40) der Eingangsrolle (36) schwenkbar befestigten Bleche (3) montiert sind und die Formbänder relativ zueinander elastisch verformbar sind, wobei Mittel vorgesehen sind, um den Umlaufsinn eines der Förderbänder umzukehren, wenn das Bündel (32) geformt ist.

14. Schneid- und Sammelvorrichtung nach Anspruch 13, **dadurch gekennzeichnet**, daß zwei Klappen (42) schwenkbar um die Achse (40) der Eingangsrolle Vorgesehen sind, um den Eingang der Bündelvorrichtung zu schließen, wenn der Umlaufsinn des Förderbandes umgekehrt ist.
